# EUROPÄISCHE PATENTSCHRIFT

(11) **EP 0 819 588 B1**
(45) Veröffentlichungstag und Bekanntmachung des Hinweises auf die Patenterteilung: **22.09.2004**
(21) Anmeldenummer: 97111171.1
(22) Anmeldetag: 03.07.1997
(51) Int. Cl.: B60R 22/34

(54) **Gurtaufroller für ein Fahrzeuginsassen-Rückhaltesystem**
Belt retractor for a vehicle occupant restraint system
Rétracteur de sangle pour un système de retenue des occupants d'un véhicule

(30) Priorität: 15.07.1996 DE 29612279 U
(43) Veröffentlichungstag der Anmeldung: 21.01.1998
(73) Patentinhaber: TRW Automotive GmbH, 73553 Alfdorf (DE)
(72) Erfinder: Weller, Hermann-Karl, 73553 Alfdorf (DE); Wier, Franz, 73571 Göggingen (DE)
(74) Vertreter: Degwert, Hartmut, Dipl.-Phys.

(56) Entgegenhaltungen:
- DE-A- 4 231 050
- FR-A- 1 339 230
- US-A- 5 611 604

## Beschreibung

Die Erfindung betrifft einen Gurtaufroller nach dem Oberbegriff des Anspruchs 1.

Üblicherweise werden Gurtaufroller an Kraftfahrzeugen mittels einer Schraube befestigt, die entweder in ein am Fahrzeug oder in ein am Gurtaufroller ausgebildetes Innengewinde eingeschraubt wird.

Die FR 1 339 230 A beschreibt einen Gurtaufroller gemäß dem Oberbegriff von Anspruch 1 mit einem lasttragenden Rahmen, der mit einem ein Außengewinde tragenden zylindrischen Ansatzt, in Form einer eingesetzten Schraube, versehen ist. Auf den Ansatz kann eine Schraubenmutter zur Befestigung des Gurtaufrollers im Fahrzeug aufgeschraubt werden.

Die Erfindung schafft einen Gurtaufroller mit den Merkmalen des Anspruchs 1. Durch die Verwendung eines mit einem Außengewinde versehenen Ansatzes zur Befestigung des Gurtaufrollers ergeben sich eine Reihe von Vorteilen. Mit einem solchen Ansatz, der in eine passende Befestigungsöffnung am Fahrzeug eingesetzt wird, kann der Gurtaufroller bei der Montage vorfixiert werden, ohne daß hierzu bereits die Schraubmutter aufgeschraubt sein muß. Weiterhin läßt sich der Gurtaufroller durch Eingreifen seines Ansatzes in die Befestigungsöffnung sehr genau positionieren. Schließlich ist die Befestigung eines Gurtaufrollers mittels eines Ansatzes kostengünstiger, da der mit dem Außengewinde versehene Ansatz und die zugehörige Schraubmutter billiger sind als eine Schraube und das zugehörige Mutternteil. Durch die hülsenförmige Ausbildung des Ansatzes ergibt sich eine Material- und Gewichtseinsparung, da der Ansatz nur mit der für das Gewinde und dessen Festigkeit notwendigen Wandstärke gebildet sein muß. Der Führungsstift bildet eine Führung für die Schraubmutter, wenn diese auf den Ansatz aufgeschraubt wird. Dies ist insbesondere bei Gurtaufrollern vorteilhaft, bei denen die Montage verdeckt an einer von außen nur schwer zugänglichen Stelle im Fahrzeug erfolgt.

Gemäß einer bevorzugten Ausführungsform der Erfindung ist vorgesehen, daß der Ansatz einteilig mit dem Rahmen ausgebildet ist. Durch diese Gestaltung ergibt sich eine noch kostengünstigere Fertigung.

Gemäß der bevorzugten Ausführungsform ist weiterhin vorgesehen, daß der Führungsstift mit einer zentrischen Durchgangsbohrung versehen ist, in der ein Signalstift angeordnet ist. Dieser Signalstift kann insbesondere zur Stabilisierung des Führungsstiftes beitragen, wenn dieser aus Kosten- und Gewichtsgründen beispielsweise aus Kunststoff hergestellt ist.

Gemäß der bevorzugten Ausführungsform ist weiterhin vorgesehen, daß der Signalstift aus dem von dem Bodenteil abgewandten Ende des Führungsstifts hervorsteht und in die Durchgangsbohrung einschiebbar ist, wobei eine Preßpassung gebildet ist. Durch eine geeignete Ausgestaltung des Werkzeugs, mit dem die Schraubmutter auf den Ansatz aufgeschraubt wird, kann der aus dem Führungsstift hervorstehende Teil des Signalstifts zur Kontrolle dafür verwendet werden, ob die Schraubmutter vorschriftsmäßig auf den Ansatz aufgeschraubt wurde. Wenn die Schraubmutter nicht ausreichend weit auf den Ansatz aufgeschraubt wurde, drückt das zum Anziehen der Schraubmutter verwendete Werkzeug den aus dem Führungsstift hervorstehenden Teil des Signalstifts nicht in den Führungsstift hinein, so daß der Signalstift weiterhin aus dem Führungsstift hervorsteht. Dies ist optisch sichtbar, insbesondere dann, wenn der hervorstehende Teil des Signalstifts mit einer Markierungsfarbe eingefärbt ist, wie dies gemäß der bevorzugten Ausführungsform vorgesehen ist.

Gemäß der bevorzugten Ausführungsform ist weiterhin vorgesehen, daß das von dem Bodenteil des Gurtaufrollers abgewandte Ende des Führungsstifts mit sich bezüglich der Längsachse des Führungsstifts radial erstreckenden Einschnitten versehen ist. Auch diese Gestaltung läßt sich im Zusammenwirken mit einer geeigneten Ausgestaltung des für das Anziehen der Schraubmutter verwendeten Werkzeugs für eine Kontrolle einer ordungsgemäßen Montage verwenden. Wenn das Werkzeug auf den Führungsstift aufgesetzt wird, ohne daß eine Schraubmutter vorhanden ist, kann das Werkzeug so weit auf den Führungsstift geschoben werden, daß es zu einem Eingriff zwischen den an dem Führungsstift vorgesehenen Einschnitten und komplementären Vorsprüngen kommt, die am Werkzeug ausgebildet sind, so daß es bei einer Drehung des Werkzeugs relativ zum Führungsstift zu deutlich fühlbaren Vibrationen kommt.

Weitere vorteilhafte Ausgestaltungen ergeben sich aus den Unteransprüchen.

Die Erfindung wird nachfolgend unter Bezugnahme auf die bevorzugte Ausführungsform erläutert, die in der Zeichnung dargestellt ist. In dieser zeigen:
- Fig. 1 einen schematischen Querschnitt durch einen erfindungsgemäßen Gurtaufroller;
- Fig. 2 schematisch den Gurtaufroller von Fig. 1 während der Montage; und
- Fig. 3 schematisch das vordere Ende eines Führungsstifts mit einem Signalstift gemäß einer Variante.

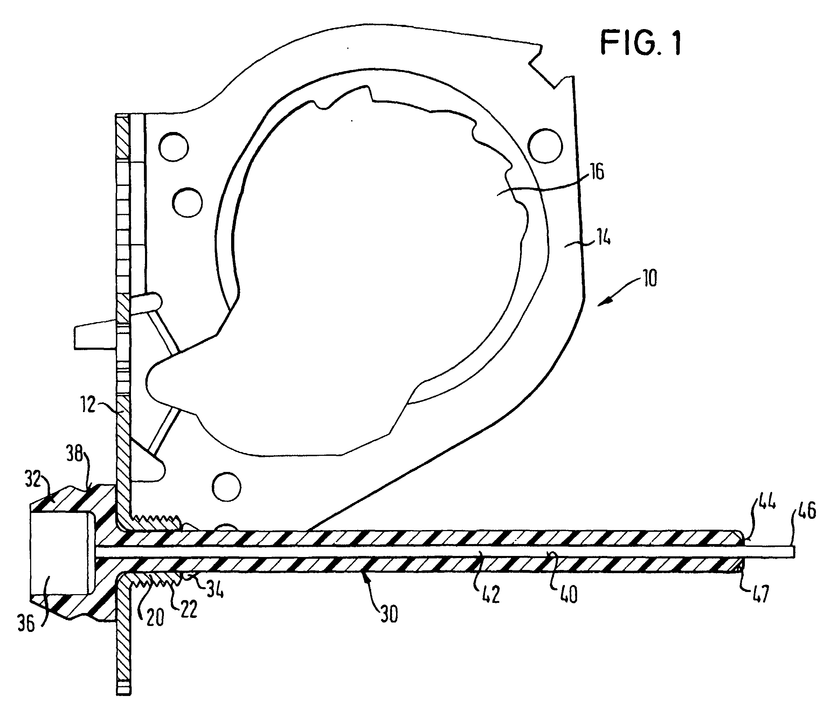

In Fig. 1 ist in einem schematischen Querschnitt ein erfindungsgemäßer Gurtaufroller dargestellt, wobei die für die Erfindung nicht wesentlichen Funktionsteile im Hinblick auf eine übersichtliche Darstellung weggelassen wurden.

Der erfindungsgemäße Gurtaufroller weist einen lasttragenden Rahmen 10 aus Metall auf, der U-förmig ist und aus einem Bodenteil 12 und zwei Schenkeln besteht, von denen nur der hinter der Schnittebene liegende Schenkel 14 dargestellt ist. In jedem Schenkel ist eine Öffnung 16 gebildet, in der drehbar eine (nicht dargestellte) Gurtspule gelagert ist.

Am Bodenteil 12 ist auf der den Schenkeln zugewandten Seite ein Ansatz 20 gebildet, der einteilig mit dem Rahmen 10 ist. Dieser Ansatz kann durch Fließpressen hergestellt sein.

Der Ansatz 20 hat die Form einer Hülse, auf deren Außenumfangsfläche ein Außengewinde 22 gebildet ist, auf das eine Schraubmutter zur Befestigung des Gurtaufrollers am Fahrzeug aufschraubbar ist.

Durch den Ansatz 20 hindurch erstreckt sich ein Führungsstift 30, der beispielsweise aus Kunststoff besteht. Dieser Führungsstift 30 ist auf der von den Schenkeln des Rahmens 10 abgewandten Seite mit einem Kopf 32 versehen, der an dem Bodenteil 12 anliegt. Der Führungsstift 30 ist in dem Ansatz 20 durch Preßsitz zwischen der Innenwandung des Ansatzes 20 und der Außenumfangsfläche des Führungsstiftes 30 festgelegt. Zusätzlich sind auf dem Führungsstift 30 mehrere Rastnasen 34 vorgesehen, die an der den Schenkeln zugewandten Stirnseite des Ansatzes 20 anliegen. Somit ist der Führungsstift 30 sowohl kraftschlüssig mittels des Preßsitzes als auch formschlüssig mittels des Kopfes 32 und der Rastnasen 34 an den Rahmen 10 festgelegt.

Der Kopf 32 ist mit einer Rastausnehmung 36 und einer in Umfangrichtung verlaufenden Rastnut 38 versehen, deren Funktion später beschrieben wird.

Entlang seiner Längsachse ist der Führungsstift 30 mit einer zentrischen Durchgangsbohrung 40 versehen, in der ein Signalstift 42 angeordnet ist, der bei dieser Ausführungsform aus Federstahldraht besteht, um eine hohe Elastizität zu erhalten. Der Drahtstift steht über das von dem Kopf 32 abgewandte und die Schenkel des Rahmens 10 überragenden stirnseitige Ende 44 des Führungsstiftes 30 hinaus (hervorstehender Teil 46). Vorzugsweise ist vorgesehen, daß mindestens der Teil 46 des Drahtstiftes 42 mit einer Markierungsfarbe eingefärbt ist. Die Funktion der Markierungsfarbe wird ebenfalls später erläutert. Der Innendurchmesser der Durchgangsbohrung 40 und der Außendurchmesser des Drahtstiftes 42 sind so gewählt, daß sich eine Preßpassung ergibt, durch die der Drahtstift 42 mit einer vorbestimmten Haltekraft in dem Führungsstift 30 festgelegt ist. Diese Haltekraft kann insbesondere überwunden werden, indem auf den Teil 46 eine entlang der Längsrichtung des Führungsstiftes 30 wirkende Kraft aufgebracht wird. Das Ende 46 des Führungsstiftes 30 ist mit sich radial erstreckenden Einschnitten 47 versehen, deren Funktion ebenfalls später beschrieben wird.

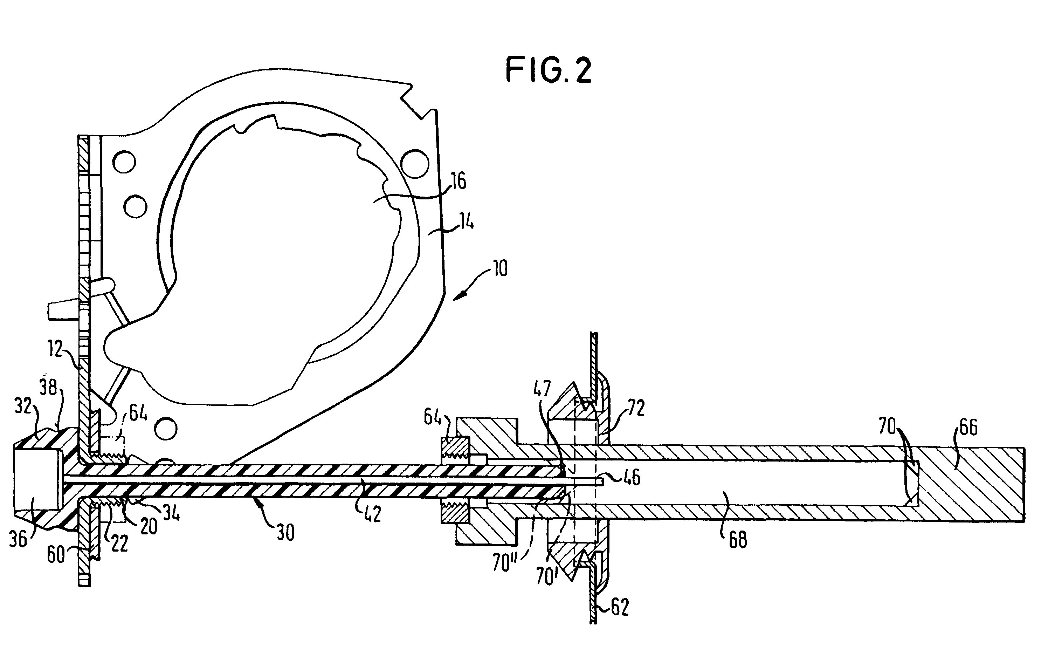

In Fig. 2 ist schematisch die Montage des in Fig. 1 dargestellten Gurtaufrollers in einem Fahrzeug dargestellt. Die in Fig. 1 dargestellte Ausgestaltung eines erfindungsgemäßen Gurtaufrollers ist insbesondere dann vorteilhaft, wenn der Gurtaufroller an einer verdeckten und von außen nur schwer zugänglichen Stelle im Fahrzeug montiert werden muß. Dies ist in Fig. 2 schematisch angedeutet. Der Gurtaufroller soll in einem Hohlraum zwischen einem ersten Karosserieteil 60 und einem zweiten Karosserieteil 62 montiert werden, wobei er mit dem ersten Karosserieteil 60 verschraubt werden soll, das zu diesem Zweck mit einer Öffnung versehen ist, deren Innendurchmesser an den Außendurchmesser des auf dem Ansatz 20 gebildeten Außengewindes 22 angepaßt ist. Zur Vorbereitung der Montage kann der Gurtaufroller mit einer (nicht dargestellten) Abdeckung verbunden werden, die an dem Gurtaufroller durch Einklipsen in die Rastausnehmung 36 und die Rastnut 38 festgelegt wird. Dann wird der Gurtaufroller in das Fahrzeug eingesetzt, so daß der Ansatz 20 in der Öffnung in dem Karosserieteil 60 zu liegen kommt. In diesem Zustand ist der Gurtaufroller vorfixiert, ohne daß es weiterer Befestigungsmittel bedarf. Nun wird durch eine Öffnung in dem zweiten Karosserieteil 62 hindurch eine Befestigungsmutter 64 auf das Außengewinde 22 aufgeschraubt. Der Führungsstift 30 dient hierbei als Führung für die Schraubmutter 64 und ein für deren Aufschrauben verwendetes, schematisch dargestelltes Werkzeug 66. Das Werkzeug 66 weist ein Sackloch 68 sowie eine Aufnahme für die Schraubmutter 64 auf. Am Boden des Sacklochs sind Vorsprünge 70 vorgesehen, die zu den Einschnitten 47 am Führungsstift 30 komplementär sind.

Bei einer ordnungsgemäßen Montage führt der Führungsstift 30 das Werkzeug 66 und die Schraubmutter 64 bis zum Ansatz 20, und durch eine Drehung des Werkzeugs 66 kann die Schraubmutter 64 auf das Außengewinde 22 aufgeschraubt werden. Das Sackloch 68 ist so bemessen, daß dessen Boden an dem hervorstehenden Teil 46 des Drahtstifts 42 in Anlage gelangt und diesen gleichzeitig mit dem Aufschrauben der Schraubmutter 64 auf das Außengewinde 22 in den Führungsstift 30 hineindrückt. Nach dem Entfernen des Werkzeugs 66 kann dies in einfacher Weise optisch kontrolliert werden: Wenn der mit der Markierungsfarbe eingefärbte Teil 46 des Drahtstifts 42 noch sichtbar ist, ist die Schraubmutter nicht korrekt oder nicht ausreichend weit auf das Außengewinde 22 aufgeschraubt worden. Um zusätzlich zur optischen Kontrolle eine mechanische Kontrolle zu erhalten, ist die Länge des Teils 46 so bemessen, daß die Öffnung für das Werkzeug 66 in dem Karosserieteil 62 nur dann mit einer dort anzubringenden Abdeckung 72 verschlossen werden kann, wenn der Teil 46 ausreichend weit in den Führungsstift 30 eingedrückt wurde.

Durch die erfindungsgemäße Gestaltung ist außerdem Vorsorge getroffen, daß das Fehlen der Schraubmutter 64 bei der Montage des Gurtaufrollers bemerkt wird. Falls das Werkzeug 66 ohne Schraubmutter 64 auf den Führungsstift 30 aufgesetzt und in Richtung des Ansatzes 22 geschoben wird, führt auch dies zu einem Hineindrücken des Teils 46 in den Führungsstift 30, so daß fälschlicherweise eine korrekte Montage angezeigt würde. Jedoch kann beim Fehlen der Schraubmutter 64 das Werkzeug 66 so weit auf den Führungsstift 30 geschoben werden, daß es zu einem Eingriff zwischen den Einschnitten 47 am Ende 44 des Führungsstifts 30 und den Vorsprüngen 70 am Boden des Sacklochs 68 kommt, wodurch, wenn das Werkzeug 66 gedreht wird, um die vermeintlich vorhandene Schraubmutter 64 aufzuschrauben, sich deutlich spürbare Vibrationen ergeben, die eine fehlerhafte Montage anzeigen. In Fig. 2 ist gestrichelt mit dem Bezugszeichen 70' die Stellung der Vorsprünge 70 bei ordnungsgemäß vorhandener Schraubmutter 64 und gestrichelt als 70'' die Stellung der Vorsprünge 70 bei fehlender Schraubmutter dargestellt. Anstelle der Einschnitte 47 und der Vorsprünge 70 könnte am Boden des Sacklochs 68 auch ein Schalter vorgesehen sein, der dann, wenn das Werkzeug 66 zu weit auf den Führungsstift 30 aufgeschoben wird, wie dies bei fehlender Schraubmutter 64 der Fall ist, betätigt wird und ein Warnsignal auslöst.

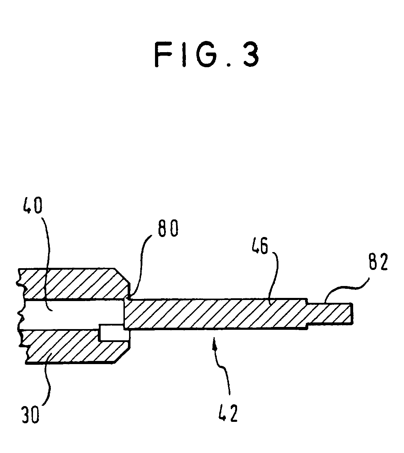

In Fig. 3 ist eine Variante des Signalstifts 42 dargestellt. Bei dieser Ausführungsform ist der Signalstift nicht einen sich durch die Durchgangsbohrung 40 hindurch erstreckenden Drahtstift gebildet, sondern durch einen einstückig mit dem Führungsstift ausgebildeten Signalstift, der über eine Sollbruchstelle 80 mit dem Führungsstift 30 verbunden ist. Ein kleiner Teil des Signalstifts erstreckt sich bereits im Ausgangszustand in die Durchgangsbohrung 40 hinein, während der größte Teil des Signalstifts über das vom Bodenteil abgewandte Ende des Führungsstifts 30 hinaussteht. Am seinem freien Ende ist der Signalstift 42 mit einer Formschlußgestaltung 82 versehen, die in ein geeignet geformtes Gegenstück am Boden des Sacklochs 68 des Werkzeugs 66 eingreifen kann, so daß die Drehbewegung des Werkzeugs auf den Signalstift übertragen wird, wodurch das Abscheren vom Führungsstift 30 erleichtert ist. Im dargestellten Beispiel ist die Formschlußgestaltung 82 eine Abflachung.

## Patentansprüche

1. Gurtaufroller für ein Fahrzeuginsassen-Rückhaltesystem, mit einem lasttragenden Rahmen (10), der U-förmig mit einem Bodenteil (12) und zwei Schenkeln gebildet ist, wobei der Rahmen mit einem ein Außengewinde (22) tragenden zylindrischen Ansatz (20) versehen ist, auf den eine Schraubmutter (64) zur Befestigung des Gurtaufrollers am Fahrzeug aufschraubbar ist, **dadurch gekennzeichnet, daß** der Ansatz (20) hülsenförmig ist, wobei sich durch den Ansatz (20) hindurch ein langgestreckter Führungsstift (30) zur Führung der auf den Ansatz (20) aufzuschraubenden Schraubmutter (64) auf der Seite der Schenkel des Rahmens erstreckt.

2. Gurtaufroller nach Anspruch 1, **dadurch gekennzeichnet, daß** der Ansatz (20) einteilig mit dem Rahmen (10) ausgebildet ist.

3. Gurtaufroller nach Anspruch 1 oder 2, **dadurch gekennzeichnet, daß** der Ansatz (20) durch Fließpressen gebildet ist.

4. Gurtaufroller nach Anspruch 1 oder 2, **dadurch gekennzeichnet, daß** der Ansatz (20) durch Tiefziehen gebildet ist.

5. Gurtaufrollers nach einem der vorhergehenden Ansprüche, **dadurch gekennzeichnet, daß** der Führungsstift (30) mit Preßsitz in dem Ansatz (20) sitz.

6. Gurtaufroller nach einem der vorhergehenden Ansprüche, **dadurch gekennzeichnet, daß** der Führungsstift (30) mit einem Kopf (32) versehen ist, der auf der von den Schenkeln abgewandten Seite des Bodenteils (12) anliegt.

7. Gurtaufroller nach Anspruch 6, **dadurch gekennzeichnet, daß** der Kopf (32) mit einer Rastausnehmung (36) versehen ist.

8. Gurtaufroller nach einem der Ansprüche 6 und 7, **dadurch gekennzeichnet, daß** der Kopf (32) mit einer Rastnut (38) versehen ist.

9. Gurtaufroller nach einem der vorhergehenden Ansprüche, **dadurch gekennzeichnet, daß** der Führungsstift (30) mit Rastnasen (34) versehen ist, die an der den Schenkeln zugewandten Stirnseite des Ansatzes (20) anliegen.

10. Gurtaufroller nach einem der vorhergehenden Ansprüche, **dadurch gekennzeichnet, daß** der Führungsstift (30) aus Kunststoff besteht.

11. Gurtaufroller nach einem der vorhergehenden Ansprüche, **dadurch gekennzeichnet, daß** der Führungsstift (30) mit einer zentrischen Durchgangsbohrung (40) versehen ist, in der ein Signalstift (42) angeordnet ist, der aus dem von dem Bodenteil (12) des Gurtaufroller abgewandten Ende des Führungsstifts (30) hervorsteht.

12. Gurtaufroller nach Anspruch 11, **dadurch gekennzeichnet, daß** der Signalstift (42) ein separates, in den Führungsstift (30) eingesetztes Teil ist.

13. Gurtaufroller nach Anspruch 12, **dadurch gekennzeichnet, daß** der Signalstift (42) aus Draht besteht.

14. Gurtaufroller nach Anspruch 13, **dadurch gekennzeichnet, daß** der Drahtstift (42) aus Federdraht besteht.

15. Gurtaufroller nach Anspruch 11, **dadurch gekennzeichnet, daß** der Signalstift (42) einstückig an den Führungsstift angeformt ist.

16. Gurtaufroller nach Anspruch 15, **dadurch gekennzeichnet, daß** ein aus dem von dem Bodenteil (12) des Gurtaufroller abgewandten Ende des Führungsstifts (30) hervorstehende Teil (46) des Signalstifts (42) mit einer Formschlußgestaltung (82) versehen ist.

17. Gurtaufroller nach einem der Ansprüche 11 bis 16, **dadurch gekennzeichnet, daß** der Signalstift (42) aus dem von dem Bodenteil (12) abgewandten Ende des Führungsstifts (30) hervorsteht und in die Durchgangsbohrung (40) einschiebbar ist, wobei eine Preßpassung gebildet ist.

18. Gurtaufroller nach Anspruch 17, **dadurch gekennzeichnet, daß** der aus dem von dem Bodenteil (12) des Gurtaufroller abgewandten Ende des Führungsstifts (30) hervorstehende Teil (46) des Signalstifts (42) mit einer Markierungsfarbe eingefärbt ist.

19. Gurtaufroller nach einem der vorhergehenden Ansprüche, **dadurch gekennzeichnet, daß** das von dem Bodenteil (12) des Gurtaufrollers abgewandte Ende des Führungsstifts (30) mit sich bezüglich der Längsachse des Führungsstifts (30) radial erstreckenden Einschnitten (47) versehen ist.

20. Gurtaufroller nach einem der vorhergehenden Ansprüche, **dadurch gekennzeichnet, daß** der Führungsstift (30) die Schenkel des Rahmens überragt.

## Claims

1. A belt retractor for a vehicle occupant restraint system, comprising a load bearing frame (10) which is designed in the shape of a U with a bottom part (12) and two limbs, the frame being provided with a cylindrical boss (20) having an external screw thread (22) and on which a nut (64) may be screwed for the attachment of the belt retractor to a vehicle, **characterised in that** the boss (20) is sleeve-shaped, an elongated guide pin (30) extending through the boss (20) for guiding the nut (64) to be screwed onto the boss (20) on the side of the limbs of the frame.

2. The belt retractor as claimed in claim 1, **characterised in that** the boss (20) is designed integrally with the frame (10).

3. The belt retractor as claimed in claim 1 or 2, **characterised in that** the boss (20) is formed by extrusion.

4. The belt retractor as claimed in claim 1 or 2, **characterised in that** the boss (20) is formed by deep-drawing.

5. The belt retractor as claimed in any of the preceding claims, **characterised in that** the guide pin (30) is mounted with a press fit in the boss (20).

6. The belt retractor as claimed in any of the preceding claims, **characterised in that** the guide pin (30) is provided with a head (32) abutting that side of the bottom part (12) which faces away from the limbs.

7. The belt retractor as claimed in claim 6, **characterised in that** the head (32) is provided with a detent recess (36).

8. The belt retractor as claimed in either of claims 6 and 7, **characterised in that** the head (32) is provided with a detent groove (38).

9. The belt retractor as claimed in any of the preceding claims, **characterised in that** the guide pin (30) is provided with detent projections (34) which abut the end face of the boss (20), which faces the limbs.

10. The belt retractor as claimed in any of the preceding claims, **characterised in that** the guide pin (30) is made of plastic.

11. The belt retractor as claimed in any of the preceding claims, **characterised in that** the guide pin (30) is provided with a centric through hole (40) in which a signal pin (42) is arranged which projects from that end of the guide pin (30) which faces away from the bottom part (12) of the belt retractor.

12. The belt retractor as claimed in claim 11, **characterised in that** the signal pin (42) is a separate part which is inserted in the guide pin (30).

13. The belt retractor as claimed in claim 12, **characterised in that** the signal pin (42) is made from wire.

14. The belt retractor as claimed in claim 13, **characterised in that** the wire pin (42) is made from spring wire.

15. The belt retractor as claimed in claim 11, **characterised in that** the signal pin (42) is formed integrally with the guide pin.

16. The belt retractor as claimed in claim 15, **characterised in that** a portion (46) of the signal pin (42), which protrudes from that end of the guide pin (30) which faces away from the bottom part (12) of the belt retractor, is provided with a configuration (82) adapted for an interlocking fit.

17. The belt retractor as claimed in any of claims 11 to 16, **characterised in that** the signal pin (42) protrudes from that end of the guide pin (30) which faces away from the bottom part (12) and can be pushed into the through hole (40), a press fit being formed thereby.

18. The belt retractor as claimed in claim 17, **characterised in that** the portion (46) of the signal pin (42), which protrudes from that end of the guide pin (30) which faces away from the bottom part (12) of the belt retractor, is coloured with a marking colour.

19. The belt retractor as claimed in any of the preceding claims, **characterised in that** the end of the guide pin (30), which faces away from the bottom part (12) of the belt retractor, is provided with cut-outs (47) extending radially in relation to the longitudinal axis of the guide pin (30).

20. The belt retractor as claimed in any of the preceding claims, **characterised in that** the guide pin (30) extends beyond the limbs of the frame.

## Revendications

1. Enrouleur de ceinture pour un système de retenue d'occupants d'un véhicule, comportant un cadre (10) porteur de charge qui a la forme d'un U avec une partie de fond (12) et deux branches, le cadre étant pourvu d'un appendice (20) cylindrique portant un filetage extérieur (22), sur lequel on peut visser un écrou (64) pour fixer l'enrouleur de ceinture sur le véhicule, **caractérisé en ce que** l'appendice (20) est en forme de douille, une tige de guidage (30) allongée s'étendant à travers l'appendice (20) pour guider l'écrou (64) à visser sur l'appendice (20) sur le côté des branches du cadre.

2. Enrouleur de ceinture selon la revendication 1, **caractérisé en ce que** l'appendice (20) est réalisé d'un seul tenant avec le cadre (10).

3. Enrouleur de ceinture selon la revendication 1 ou 2, **caractérisé en ce que** l'appendice (20) est réalisé par extrusion.

4. Enrouleur de ceinture selon la revendication 1 ou 2, **caractérisé en ce que** l'appendice est réalisé par emboutissage profond.

5. Enrouleur de ceinture selon l'une des revendications précédentes, **caractérisé en ce que** la tige de guidage (30) est logée avec ajustage dans l'appendice (20).

6. Enrouleur de ceinture selon l'une des revendications précédentes, **caractérisé en ce que** la tige de guidage (30) est pourvue d'une tête (32) qui est en appui sur le côté de la partie de fond (12) qui est détourné des branches.

7. Enrouleur de ceinture selon la revendication 6, **caractérisé en ce que** la tête (32) est pourvue d'un évidement d'enclenchement (36).

8. Enrouleur de ceinture selon l'une des revendications 6 et 7, **caractérisé en ce que** la tête (32) est pourvue d'une gorge d'enclenchement (38).

9. Enrouleur de ceinture selon l'une des revendications précédentes, **caractérisé en ce que** la tige de guidage (30) est pourvue d'ergots d'enclenchement qui sont en appui sur la face frontale de l'appendice (20), qui est tournée vers les branches.

10. Enrouleur de ceinture selon l'une des revendications précédentes, **caractérisé en ce que** la tige de guidage (30) est en matière plastique.

11. Enrouleur de ceinture selon l'une des revendications précédentes, **caractérisé en ce que** la tige de guidage (30) est pourvue d'un perçage traversant (40) central dans lequel est agencée une tige de signalisation (42) qui fait saillie hors de l'extrémité de la tige de guidage (30), qui est détournée de la partie de fond (12) de l'enrouleur de ceinture.

12. Enrouleur de ceinture selon la revendication 11, **caractérisé en ce que** la tige de signalisation (42) est une partie séparée introduite dans la tige de guidage (30).

13. Enrouleur de ceinture selon la revendication 12, **caractérisé en ce que** la tige de signalisation (42) est en fil métallique.

14. Enrouleur de ceinture selon la revendication 12, **caractérisé en ce que** la tige de signalisation (42) est en fil pour ressort.

15. Enrouleur de ceinture selon la revendication 13, **caractérisé en ce que** la tige de signalisation (42) est formée d'un seul tenant sur la tige de guidage.

16. Enrouleur de ceinture selon la revendication 15, **caractérisé en ce qu'**une partie (46) de la tige de signalisation (42), laquelle fait saillie hors de l'extrémité de la tige de guidage (30), qui est détournée de la partie de fond (12) de l'enrouleur de ceinture, est pourvue d'une configuration permettant une coopération de formes.

17. Enrouleur de ceinture selon l'une des revendications 11 à 16, **caractérisé en ce que** la tige de signalisation (42) fait saillie hors de l'extrémité de la tige de guidage (30), qui est détournée de la partie de fond (12), et peut être introduite dans le perçage traversant (40), formant ainsi un ajustage.

18. Enrouleur de ceinture selon la revendication 17, **caractérisé en ce que** la partie (46) de la tige de signalisation (42), laquelle fait saillie hors de l'extrémité de la tige de guidage (30), qui est détournée de la partie de fond (12) de l'enrouleur de ceinture, est colorée par une couleur de repérage.

19. Enrouleur de ceinture selon l'une des revendications précédentes, **caractérisé en ce que** l'extrémité de la tige de guidage (30), qui est détournée de la partie de fond (12) de l'enrouleur de ceinture, est pourvue d'encoches (47) s'étendant radialement par rapport à l'axe longitudinal de la tige de guidage (30).

20. Enrouleur de ceinture selon l'une des revendications précédentes, **caractérisé en ce que** la tige de guidage (30) surplombe les branches du cadre.
